# EUROPEAN PATENT SPECIFICATION

(11) **EP 3 081 373 B1**
(45) Date of publication and mention of the grant of the patent: **03.04.2019**
(21) Application number: 15745972.8
(22) Date of filing: 28.01.2015
(51) Int. Cl.: B32B 3/28, B64C 3/34, B32B 27/08, B32B 27/38, B32B 27/42, B32B 3/26

(54) **COMPOSITE MATERIAL STRUCTURE**
VERBUNDSTOFFSTRUKTUR
STRUCTURE EN MATÉRIAU COMPOSITE

(30) Priority: 04.02.2014 JP 2014019566
(43) Date of publication of application: 19.10.2016
(73) Proprietor: Mitsubishi Heavy Industries, Ltd., Tokyo 108-8215 (JP)
(72) Inventor: ABE, Toshio, Tokyo 108-8215 (JP); TAKAGI, Kiyoka, Tokyo 108-8215 (JP); KOYAMA, Takayuki, Tokyo 108-8215 (JP); YOSHINO, Katsuya, Tokyo 108-8215 (JP); KISHIMOTO, Kazuaki, Tokyo 108-8215 (JP); SAITO, Koichi, Nagoya-shi Aichi 453-0862 (JP); ISHIDA, Takashi, Nagoya-shi Aichi 453-0862 (JP)
(74) Representative: Henkel, Breuer & Partner
(86) International application number: PCT/JP2015/052407
(87) International publication number: WO 2015/119023

(56) References cited:
- EP-A1- 0 585 561
- EP-A1- 1 413 514
- WO-A1-2013/146335
- JP-A- H 047 136
- JP-A- H0 716 968
- JP-A- S5 668 096
- JP-A- H04 237 700
- JP-A- H06 191 491
- JP-A- H06 507 132
- JP-A- H07 172 395
- JP-A- H11 286 062
- JP-A- 2001 231 815
- JP-A- 2012 520 785
- JP-U- S58 159 320
- JP-U- S58 191 790
- US-A1- 2010 080 942
- US-A1- 2010 237 080
- US-A1- 2013 240 671

## Description

### Technical Field

The present invention relates to a composite material structure.

### Background Art

A composite material structure that is a structure formed of a composite material which is composed of a fiber (e.g. a carbon fiber and a glass fiber) and a resin (e.g. epoxy resin and phenol resin), is applied to various industrial products including an aircraft. The composite material structure has features of light weight and high stiffness, and has merits of reduction of the number of parts and the number of assembling steps though integral shaping. In recent years, the application fields are greatly increasing.

When it is required as in the aircraft structure that a structure can withstand both of a shear force and an axial force, a part (e.g. an outer skin) which deals with the shear force and a part (e.g. a stringer) which deals with the axial force are separately manufactured in a technique, so that they are combined in a post process. For example, such a technique is disclosed in US 6, 702, 911A). However, as the result of consideration by the inventor, the merits of the composite material structure such as reduction of the number of parts and the number of assembling steps are utilized sufficiently in the structure disclosed in US 6,702,911A.

Note that as the techniques related to the present invention, US 5,469,686A discloses a composite structure truss element which contains a first layer, a plurality of tubular members arranged on the first layer, and a second layer disposed on the plurality of tubular members, which are integrally shaped as a unitary structure.

Also, US 7,625,618A discloses a composite material structure which is composed of two skins and a plurality of tubular members with a substantially rectangular sectional shape (hat sections) between the two skins.

Moreover, US 2013/0020438A1 discloses a composite material frame composed of a plurality of truss elements and a cap. The truss elements are flexibly combined each other and are combined with the cap. The frame bends along a desired surface to be combined and provides a necessary stiffness when it is once combined with the surface.

US 2010/0237080 A1 discloses a plastic fuel tank that is formed as an integral extrusion blow-molded plastic fuel tank structure. The side walls of the fuel tank are provided with reinforcing structures that are formed in various manners. In some embodiments ribs of the reinforcement structure are formed by V-shaped profiles that are provided between the tank side wall and a reinforcing layer. In other embodiments the V-shaped profiles are omitted and the reinforcing layer is instead corrugated.

US 2010/0080942 A1 discloses a composite material structure where structural elements placed between a pair of face plates are formed from a plurality of individual flutes with closed cross section that are alternately arranged. Further, an additional foam stiffener is applied between the individual flutes and the lower face sheet.

### Summary of the Invention

Therefore, an object of the present invention is to provide a composite material structure in which the number of parts is reduced while having enough stiffness.

The present invention provides a composite material structure with the features of claim 1 which includes a first face plate and a corrugated core bonded to the first face plate. The corrugated core has at least one opening.

Further, the composite material structure includes a second face plate opposite to the first face plate and the corrugated core is bonded between the first face plate and the second face plate.

Preferably, a plurality of opening is formed in the corrugated core so that a truss structure is formed in the corrugated core.

In the invention, the corrugated core is composed of a first bonding section bonded to the first face plate and configured to extend in a first direction along the first face plate; a second bonding section bonded to the second face plate and configured to extend in the first direction; and a coupling section connected between the first bonding section and the second bonding section and configured to extend in the first direction. In this case, the corrugated core is configured such that a first space surrounded by the second bonding section, the coupling section and the first face plate extends in the first direction and a second space surrounded by the first bonding section, the coupling section and the second face plate extends in the first direction. Also, the first space and the second space may be alternately arranged along the first face plate in a second direction which is different from the first direction. In this case, the at least one opening is disposed in the coupling section. Also, in one embodiment, the first bonding section, the second bonding section, and the coupling section may be repetitively arranged in the corrugated core so as to form a periodic structure in the second direction. Note that the shape of the corrugated core, i.e. the shapes of the first bonding section, the second bonding section and the coupling section are not always limited to have the periodic structure in the second direction. The structure of the corrugated core may depend on a position in the composite material structure.

In this case, the corrugated core is composed of a plurality of the openings arranged in the second direction and the corrugated core may be composed of: a first base section bonded to the first bonding section and configured to extend in the first direction; a second base section bonded to the second bonding section and configured to extend in the first direction; a first diagonal column section configured to extend diagonally to the first direction to connect the first base section and the second base section; and a second diagonal column section configured to extend diagonally to the first direction to connect the first base section and the second base section. Here, a position where the first diagonal column section is connected to the second base section is shifted in the first direction from a position where the first diagonal column section is connected to the first base section, and a position where the second diagonal column section is connected to the first base section is shifted in the first direction from a position where the second diagonal column section is connected to the second base section.

Also, in another embodiment, the at least one opening may have a circular shape or an oval shape.

Also, the composite material structure may be used as a liquid tank to hold liquid between the first face plate and the second face plate.

According to the present invention, the composite material structure can be provided in which the number of parts can be reduced, while having enough stiffness.

### Brief Description of the Drawings

FIG. 1 is a perspective view showing a configuration of a composite material structure according to a first embodiment of the present invention.
FIG. 2 is a side view showing the configuration of the composite material structure in the first embodiment.
FIG. 3 is a perspective view showing a modification example of the composite material structure in the first embodiment.
FIG. 4 is a side view showing the configuration of the composite material structure in the modification example of FIG. 3.
FIG. 5 is a perspective view showing the configuration of the composite material structure according to an exemplary embodiment which is not according to the present invention as claimed.
FIG. 6 is a side view showing the configuration of the composite material structure in the exemplary embodiment.
FIG. 7 is a perspective view showing a modification example of the composite material structure in the exemplary embodiment.
FIG. 8 is a side view showing the configuration of the composite material structure of the modification example of FIG. 7.
FIG. 9A is a side view showing an example of a corrugated core structure which is suitable to transfer a shear load efficiently.
FIG. 9B is a side view showing another example of the corrugated core structure which is suitable to transfer the shear load efficiently.
FIG. 9C is a side view showing still another example of the corrugated core structure which is suitable to transfer the shear load efficiently.
FIG. 9D is a side view showing further still another example of the corrugated core structure which is suitable to transfer the shear load efficiently.
FIG. 10A is a side view showing an example of the corrugated core structure which is suitable to transfer a load in a plate thickness direction efficiently.
FIG. 10B is a side view showing another example of the corrugated core structure which is suitable to transfer the load in the plate thickness direction efficiently.
FIG. 10C is a side view showing still another example of the corrugated core structure which is suitable to transfer the load in the plate thickness direction efficiently.
FIG. 11 is a side view showing an example of the corrugated core structure which is suitable to transfer a load in an axial direction efficiently.
FIG. 12 is a conceptual diagram showing an example of a method of manufacturing the composite material structure of the first embodiment.
FIG. 13 is a conceptual diagram showing another example of the method of manufacturing the composite material structure of the first embodiment.
FIG. 14 is a conceptual diagram showing still another example of the method of manufacturing the composite material structure of the first embodiment.

### Description of the Embodiments

In embodiments of the present invention, a corrugated structure that is composed of face plates and a corrugated core is adopted as a composite material structure. By adopting the corrugated structure, it becomes possible to accomplish a structure having a high strength with the smaller number of parts and to utilize advantages of the composite material structure effectively.

On the other hand, when the corrugated structure is adopted as the composite material structure, shapability in a manufacturing process is degraded because the stiffness is excessively high. The degradation of shapability occasionally causes a problem when the composite material structure is applied to a complicated curved surface like an outer surface of an aircraft and so on.

To cope with the problem of the degradation of shapability, a corrugated core provided with at least one opening is used in embodiments to be described below. By providing the opening for the corrugated core, the stiffness can be adequately adjusted and the problem of the degradation of shapability can be coped with. Hereinafter, the embodiments of the present invention will be described in detail.

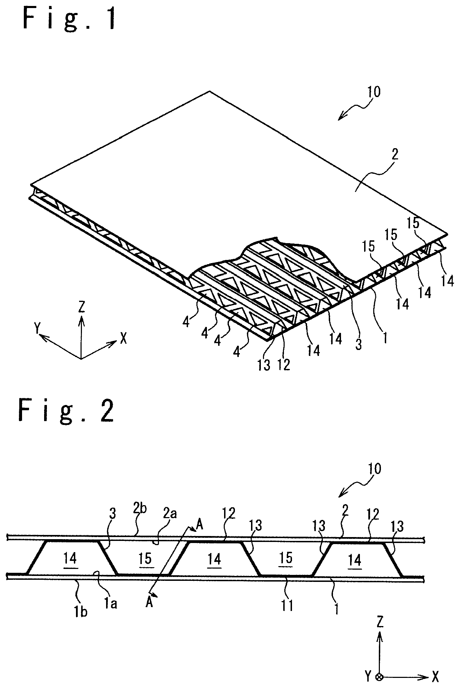

FIG. 1 is a perspective view showing a composite material structure 10 according to the first embodiment of the present invention. FIG. 2 is a side view showing the composite material structure 10. In the following description, the XYZ rectangular coordinates system is sometimes used. That is, in the following description, the X axial direction, the Y axial direction, and the Z axial direction are orthogonal to each other.

As shown in FIG. 1, the composite material structure 10 is composed of face plates 1 and 2 and a corrugated core 3. Each of the face plates 1 and 2 and the corrugated core 3 is composed of a composite material (that is, a material in which a fiber (e.g. a carbon fiber and a glass fiber) and a resin (e.g. epoxy and phenol) are combined). The face plates 1 and 2 are disposed to oppose to each other, and the corrugated core 3 is bonded to the face plates 1 and 2 between them. That is, the face plate 1 is bonded to one main surface of the corrugated core 3 and the face plate 2 is bonded to the other main surface of the corrugated core 3 which is opposite to the one main surface. Note that the word of "bonding" in this embodiment includes a meaning of bonding members formed separately, by an adhesive material or other techniques, and a meaning of integrally shaping the members formed separately as a single structure.

In detail, as shown in FIG. 2, the corrugated core 3 has a bonding section 11 bonded to the face plate 1, a bonding section 12 bonded to the face plate 2, and a coupling section 13 connecting the bonding sections 11 and 12. In the composite material structure 10 of FIG. 2, the coupling section 13 is coupled to the bonding sections 11 and 12 to be oblique to inner surfaces 1a and 2a of the face plates 1 and 2. But, the coupling section 13 may be coupled to the bonding sections 11 and 12 to be orthogonal to the inner surfaces 1a and 2a of the face plates 1 and 2. All of the bonding sections 11 and 12 and the coupling section 13 are disposed to extend in the Y axial direction (a first direction along the face plates 1 and 2). The bonding sections 11 and 12 and the coupling section 13 are all arranged repetitively in the X axial direction (in a second direction along the face plates 1 and 2 and different from the first direction). A space 14 surrounded by the bonding section 12 of the corrugated core 3, the coupling sections 13, and the inner surface 1a of the face plate 1, and a space 15 surrounded by the bonding section 11 of the corrugated core 3, the coupling sections 13, and the inner surface 2a of the face plate 2 are formed inside the composite material structure 10. As shown in FIG. 1, the corrugated core 3 has the structure in which the spaces 14 and 15 extend in the Y axial direction, and are alternately arranged in the X axial direction. Such a structure makes it possible to realize an extremely strong structure with the small number of parts and to utilize the advantage of the composite material structure effectively.

In one embodiment, the bonding sections 11 and 12 and the coupling section 13 are repeatedly arranged such that a periodic structure in the X axial direction is formed in the corrugated core 3. Note that the shape of the corrugated core 3, i.e. the shape of the bonding sections 11 and 12 and the coupling section 13 is not always limited to the periodic structure in the X axial direction, and the structure of the corrugated core 3 may depend on the position of the composite material structure 10.

Referring to FIG. 1 again, a plurality of openings 4 are provided in the corrugated core 3. The plurality of openings 4 are arranged in the Y axial direction in each of the coupling sections 13. In the present embodiment, because the openings 4 are provided for the corrugated core 3, the stiffness of the composite material structure 10 can be properly controlled and adjusted. This is useful to improve shapability in the manufacturing process.

The composite material structure 10 of the present embodiment in which the openings 4 are formed in the corrugated core 3, has various additional advantages. First, the composite material structure 10 of the present embodiment has the advantage that it is possible to freely set the strength and stiffness of the composite material structure 10, by adjusting the thicknesses of the composite materials of the face plates 1 and 2, and the corrugated core 3, and a stacking method of fiber layers (angle in stacking), and by designing the shape of opening 4 appropriately. Moreover, the formation of the openings 4 in the corrugated core 3 realizes the reduction of the load of the composite material structure 10. In addition, in the composite material structure 10 of the present embodiment, access to various positions of the composite material structure 10 is possible through the openings 4. Thus, it is possible to improve the inspection easiness of various portions of the composite material structure 10.

Moreover, in the structure in which the openings 4 are formed in the corrugated core 3, when a liquid is stored or saved inside the composite material structure 10 (i.e. in the space between the face plates 1 and 2), it is possible for liquid to flow through the openings 4. Utilizing such a characteristic, the composite material structure 10 of the present embodiment may be used as a liquid tank that stores liquid such as fuel in the space between the face plates 1 and 2, e.g. a fuel tank.

In the structure of FIG. 1, the openings 4 are formed in the corrugated core 3 to have a truss structure. Such a structure is effective to transfer the shear load efficiently and to counter the shear load in the composite material structure 10. Here, the shape of openings 4 can be changed variously according to the purpose. The ideal shape of openings 4 will be discussed later in detail.

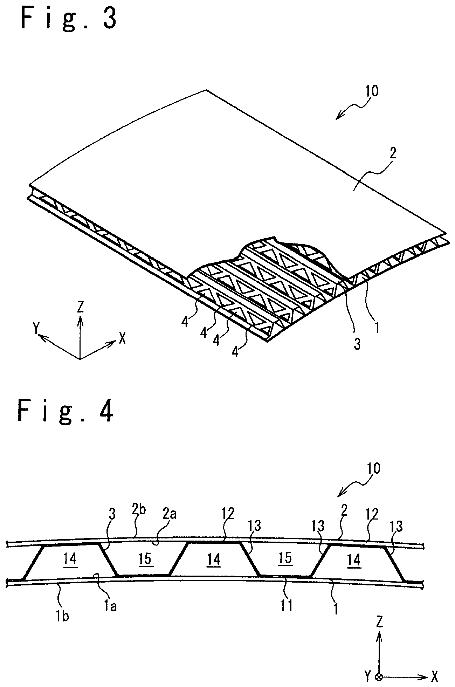

Note that the structure 1 in which the composite material structure 10 having the flat face plates 1 and 2, that is, the structure in which the outer surfaces 1b and 2b of the face plates 1 and 2 are flat is shown in FIG. 1 and FIG. 2. However, as shown in FIG. 3 and FIG. 4, the outer surfaces 1b and 2b of the face plates 1 and 2 may be curved surfaces. As described above, because the openings 4 are provided to the corrugated core 3 to improve the shapability, the composite material structure 10 of the present embodiment is suitable especially in case that the outer surfaces 1b and 2b of the face plates 1 and 2 have complicated curved surfaces.

Also, the structure in which the openings 4 are provided only to the coupling section 13 of the corrugated core 3 (that is, the structure in which the openings 4 are provided only to a portion of the corrugated core 3 away from the face plate 1) is shown in FIG. 1 and FIG. 2. However, note that the openings 4 may be provided to optional positions of the corrugated core 3 (containing the bonding sections 11 and 12).

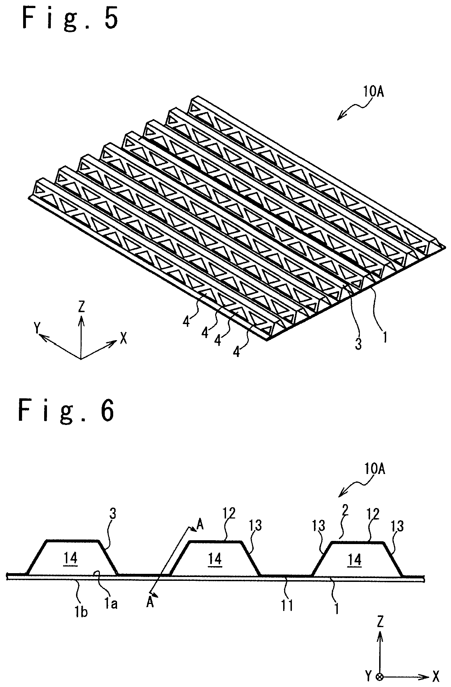

FIG. 5 and FIG. 6 are diagrams showing the composite material structure of an exemplary embodiment which is not according to the invention as claimed. In detail, FIG. 5 is a perspective view showing the composite material structure 10A of the exemplary embodiment. FIG. 6 is a side view showing the composite material structure 10A. As shown in FIG. 5 and FIG. 6, the composite material structure 10A has the structure in which the face plate 2 is removed from the composite material structure 10 of FIG. 1 and FIG. 2. In this case, the bonding section 12 of the corrugated core 3 is not bonded to the face plate 2 and functions as a portion for coupling a neighboring coupling section 13. The space 14 surrounded by the bonding section 12 of the corrugated core 3, the coupling section 13 and the inner surface 1a of the face plate 1 is formed inside the composite material structure 10A. The space 14 extends in the Y axial direction. The openings 4 are provided to the corrugated core 3. The composite material structure 10A shown in FIG. 5 and FIG. 6 has strength lower than in the composite material structure 10 shown in FIG. 1 and FIG. 2, but has the same effect in that a high-strength structure is realized with the small number of parts and the advantage of the composite material structure can be utilized effectively.

Note that the structure in which the openings 4 are provided only to the coupling section 13 is shown in FIG. 5 and FIG. 6, but the openings 4 may be provided on optional positions of the corrugated core 3 (containing the bonding sections 11 and 12).

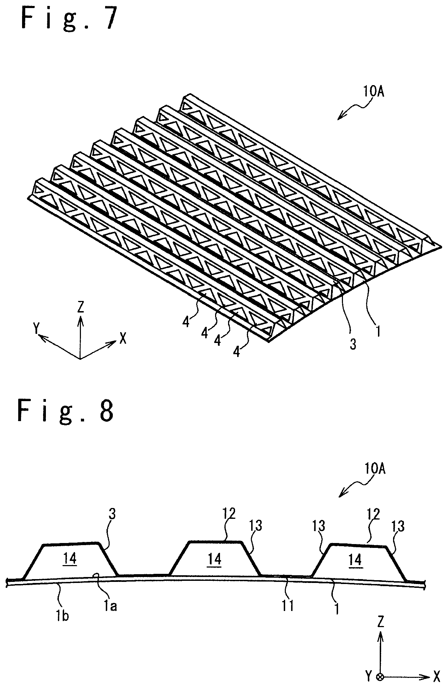

Also, FIG. 5 and FIG. 6 show the structure when the outer surface 1b of the face plate 1 (the surface which is opposite to the corrugated core 3) is a flat surface, but the outer surface 1b of the face plate 1 may be a curved surface, as shown in FIG. 7 and FIG. 8.

Next, the structure suitable for the corrugated core 3 of the composite material structure 10 or 10A of the above-mentioned embodiment of the invention and exemplary embodiment, that is, the desirable shape of openings 4 provided to the corrugated core 3 will be described. As being argued below, it is desirable to design the shape of openings 4 in consideration of the strength and stiffness required for the composite material structure 10 or
10A.

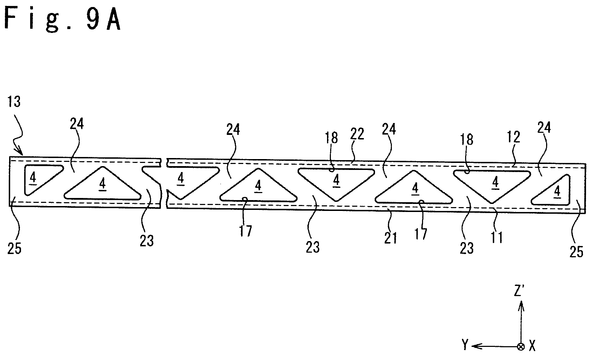

FIG. 9A to FIG. 9D are side views showing the structure of the corrugated core 3 suitable to transfer a shear load efficiently in the composite material structure 10 or 10A (that is, the shape of the openings 4 provided for the corrugated core 3). Note that FIG. 9A to FIG. 9D show the structure when the coupling section 13 of the corrugated core 3 is viewed in the direction of the arrow A of FIG. 2. In FIG. 9A to FIG. 9D, the shape of openings 4 is shown when viewing in a direction orthogonal to not the Z axial direction but the Y axial direction and in a Z' axial direction which is a direction along the coupling section 13. Note that the upper and lower direction in FIG. 9A to FIG. 9D is the Z' axial direction.

In order to efficiently transfer the shear load, it is desirable that a truss structure is formed in the coupling section 13 (the structure having an aggregate of fundamental units, each of which has a triangular shape). FIG. 9A shows an example of the coupling section 13 in which the truss structure has been formed. The openings 4 are arranged in the Y axial direction in the coupling section 13 of the corrugated core 3 in the structure of FIG. 9A. Each of the openings 4 other than the openings 4 in the both ends is formed as an almost isosceles triangular shape in which each corner is rounded. Each of the openings 4 in the both ends is formed by a right triangular shape in which each corner is rounded. Of the openings 4 other than the openings 4 in the both ends, the opening 4 having a side 17 opposite to the bonding section 11 and the opening 4 having a side 18 opposite to the bonding section 12 are alternately arranged on a line.

By providing the openings 4 having such a shape, base sections 21 and 22, diagonal column sections 23 and 24, and column sections 25 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12. As mentioned above, the bonding section 11 is a portion that bonded to the face plate 1, and the bonding section 12 is a portion that is bonded to the face plate 2 (when the face plate 2 is disposed).

The diagonal column sections 23 and 24 are connected to the base sections 21 and 22 by extending diagonally to the base sections 21 and 22 (i.e. diagonally to the Y axial direction). In this case, the diagonal column section 23 is connected to the base sections 21 and 22 such that the position in the Y axial direction of the end of the section 23 connected to the base section 22 is shifted in the +Y axial direction from the position of the end of the section 23 connected to the base section 21. The diagonal column section 24 is connected to the base sections 21 and 22 such that the position in the Y axial direction of the end of the section 24 connected to the base section 21 is shifted in the +Y axial direction from the position of the end of the section 24 connected to the base section 22. Also, the column sections 25 extend perpendicularly from the base sections 21 and 22 to the base sections 22 and 21 to connect the base sections 21 and 22.

In the structure of the above-mentioned coupling section 13, the diagonal column sections 23 and 24 are disposed to extend diagonally to the base sections 21 and 22 to connect the base sections 21 and 22. As a result, the shear load can be transferred efficiently in the composite material structure 10 or 10A. The structure of such a coupling section 13 is effective to receive the shear load which acts on the composite material structure 10 or 10A while reducing the weight of the composite material structure 10 or 10A.

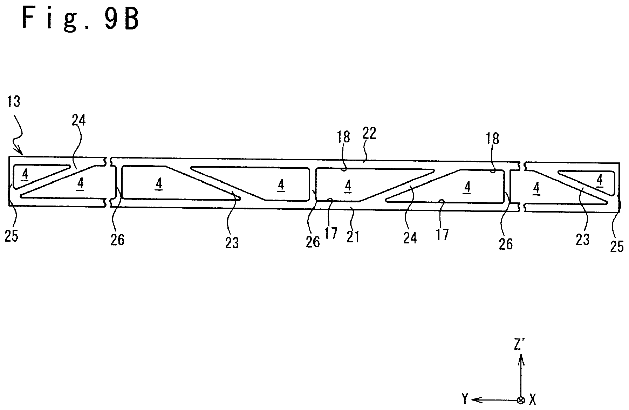

FIG. 9B is a side view showing another example of the structure of the coupling section 13 of the corrugated core 3 to transfer the shear load efficiently inside the composite material structure 10 or 10A. The openings 4 are arranged on the coupling section 13 in the Y axial direction in the structure of FIG. 9B, too. However, in the structure of FIG. 9B, each of of the openings 4 other than the openings on the both ends of the coupling section 13 is formed as a right angle trapezoidal shape in which the corner is rounded. Each of the openings on the both ends of the coupling section 13 is formed as a right triangular shape in which the corner is rounded. Here, in the openings 4 other than the openings on the both ends of the coupling section 13, there are one type of opening 4 in which the length of a side 17 opposite to the bonding section 11 in the Y axial direction is longer than the length of a side 18 opposite to the bonding section 12 in the Y axial direction, and another type of opening 4 in which the length of the side 17 opposite to the bonding section 11 in the Y axial direction is shorter than the length of the side 18 opposite to the bonding section 12 in the Y axial direction. These openings 4 are alternately arranged.

By forming the openings 4 of such a shape, the base sections 21 and 22, the diagonal column sections 23 and 24 and the column sections 25 and 26 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12.

The diagonal column sections 23 and 24 extend diagonally to the base sections 21 and 22 (i.e. diagonally to the Y axial direction) to connect the base sections 21 and 22. The diagonal column section 23 is connected to the base sections 21 and 22 such that the position in the Y axial direction of the end of the section 23 connected to the base section 21 is shifted in the +Y axial direction from the position in the Y axial direction of the end of the section 23 connected to the base section 22, and the diagonal column section 24 is connected to the base sections 21 and 22 such that the position in the Y axial direction of the end of the section 24 connected to the base section 21 is shifted in the +Y axial direction from the position in the Y axial direction of the end of the section 24 connected to the base section 22. The column section 25 is disposed to extend perpendicularly from the ends of the base sections 21 and 22 to the base section 22 and 21 to connect the base sections 21 and 22. Also, the column section 26 is disposed between the neighbor diagonal column sections 23 and 24, to extend perpendicularly from the ends of the base sections 21 and 22 to the base section 22 and 21 to connect the base sections 21 and 22.

In the structure of the above-mentioned coupling section 13, because the diagonal column sections 23 and 24 extend diagonally to the base sections 21 and 22 to connect the base sections 21 and 22, the shear load can be efficiently transferred inside the composite material structure 10 or 10A. The structure of such a coupling section 13 is effective to support the shear load which acts on the composite material structure 10 or 10A while reducing the weight of the composite material structure 10 or 10A. Also, in the structure shown in FIG. 9B, because the column sections 26 extend perpendicularly to the base sections 21 and 22 to connect the base sections 21 and 22, Improving about the strength to the load in the board thickness direction (the load which acts in the direction of the board thickness (in the Z axial direction)).

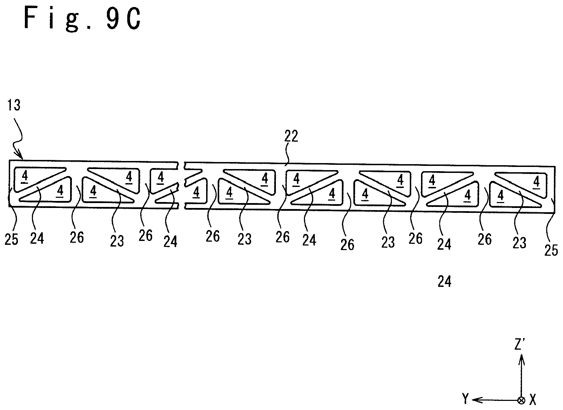

FIG. 9C is a side view showing a still another example of the structure of the coupling section 13 of the corrugated core 3 to transfer a shear load efficiently inside the composite material structure 10 or 10A. In the structure of FIG. 9C, the openings 4 are arranged in the Y axial direction in the coupling section 13. Thus, the truss structure is formed in the coupling section 13. However, in the structure of FIG. 9C, each opening 4 is formed to have a right triangular shape in which each of corners is rounded.

By providing the openings 4 of such a shape, the base sections 21 and 22, the diagonal column sections 23 and 24 and the column sections 25, 26 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12.

The diagonal column sections 23 and 24 extend diagonally to the base sections 21 and 22 (i.e. diagonally in the Y axial direction) to connect the base sections 21 and 22. The diagonal column section 23 is connected to the base sections 21 and 22 such that the position in the Y axial direction of the end of the section 23 connected to the base section 22 is shifted in the +Y direction from the position of the end of the section 23 connected to the base section 21. The diagonal column section 24 is connected to the base sections 21 and 22 so that the position in the Y axial direction of the end of the section 24 connected to the base section 21 is shifted in the +Y direction from the position of the end of the section 24 connected to the base section 22. The diagonal column sections 23 and 24 are disposed to contact each other in the structure of FIG. 9C, while the diagonal column sections 23 and 24 are separated from each other in the structure shown in FIG. 9B. The column section 25 extends perpendicularly from the ends of the base sections 21 and 22 to the base sections 21 and 22 to connect the base sections 21 and 22. Also, each column section 26 is disposed to be connected to a contact portion of the diagonal column section 23 and 24 at its one end and to be connected to the base section 21 or 22 at its other end. The column section 26 extends perpendicularly to the base sections 21 and 22 to connect the base sections 21 and 22.

In the structure of the above-mentioned coupling section 13, because the diagonal column sections 23 and 24 extend diagonally to the base sections 21 and 22 to connect the base sections 21 and 22, the shear load can be efficiently transferred inside the composite material structure 10 or 10A. The structure of such a coupling section 13 is effective to support the shear load which acts on the composite material structure 10 or 10A while reducing the weight of the composite material structure 10 or 10A. Also, in the structure of FIG. 9C, because the column section 26 is disposed to extend perpendicularly to the base sections 21 and 22 to connect the base sections 21 and 22, the strength to the load in a board thickness direction (the load which acts in the board thickness direction (the Z axial direction)).

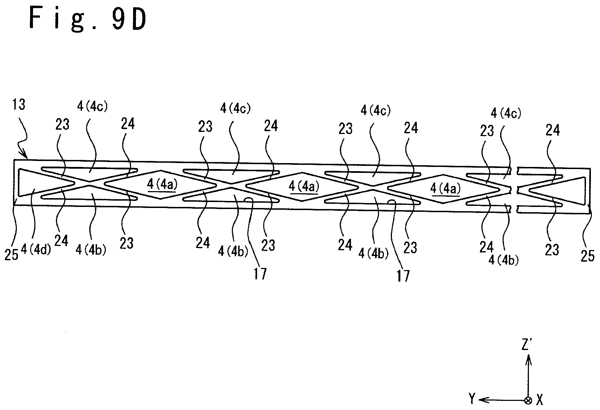

FIG. 9D is a side view showing a further another example of the structure of the coupling section 13 of the corrugated core 3 to efficiently transfer a shear load inside the composite material structure 10 or 10A. The openings 4 are arranged in the Y axial direction in the coupling section 13 in the structure of FIG. 9D. However, in the structure of FIG. 9D, the openings 4a to 4d of four kinds are provided in the coupling section 13, and thus, the truss structure is formed in the coupling section 13. In detail, the opening 4a has a diamond shape in which each corner is rounded. The opening 4b has an isosceles triangular shape in which each corner is rounded and has a side 17 opposite to the bonding section 11. On the other hand, the opening 4c has an isosceles triangular shape in which each corner is rounded and has a side 18 opposite to the bonding section 12. A pair of openings 4b and 4c is arranged in a direction orthogonal to the Y axial direction. The opening 4d has an isosceles triangular shape in which each corner is rounded and is arranged on either end of the row of openings 4.

By providing the openings 4 of such a shape, the base sections 21 and 22, the diagonal column sections 23 and 24 and the column sections 25 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12.

The diagonal column sections 23 and 24 extend diagonally to the base sections 21 and 22 (i.e. diagonally in the Y axial direction) to connect the base sections 21 and 22. The diagonal column section 23 is connected to the base sections 21 and 22 so that the position in the Y axial direction of the end of the section 23 connecting to the base section 22 is shifted in the +Y direction from the end of the section 23 connected to the base section 21. The diagonal column section 24 is connected to the base sections 21 and 22 so that the position in the Y axial direction of the end of the section 24 connected to the base section 21 is shifted in the +Y direction from the position of the end of the section 24 connecting to the base section 22. In the structure of FIG. 9D, the diagonal column sections 23 and 24 are provided to intersect each other and the diagonal column sections 23 and 24 are coupled at the center. The column sections 25 extend perpendicularly to the base sections 21 and 22 from the ends of the base sections 21 and 22 to connect the base sections 21 and 22.

In the structure of the coupling section 13 shown in FIG. 9D, because the diagonal column sections 23 and 24 extend diagonally to the base sections 21 and 22 to connect the base sections 21 and 22, the shear load can be efficiently transferred inside the composite material structure 10 or 10A. The structure of such a coupling section 13 is effective to support the shear load which acts on the composite material structure 10 or 10A while reducing the weight of the composite material structure 10 or 10A.

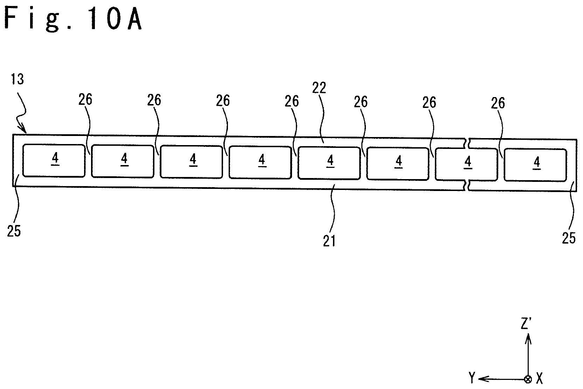

FIG. 10A to FIG. 10C are side views showing the structure of the corrugated core 3 (that is, a shape of the openings 4 provided to the corrugated core 3) suitable for efficiently transferring a board thickness direction load (i.e. the load which acts in the board thickness direction (the Z axial direction)) inside the composite material structure 10 or 10A. Note that FIG. 10A to FIG. 10C show the structure when the coupling section 13 of the corrugated core 3 is viewed to the direction of the arrow A in FIG. 2. In FIG. 10A to FIG. 10C, not the Z axial direction but the Z' axial direction (a direction perpendicular to the Y axial direction along coupling section 13) is shown. Note that the upper and lower direction in the FIG. 10A to FIG. 10C is the Z' axial direction.

FIG. 10A is a side view showing an example of the structure of the coupling section 13 of the corrugated core 3 to efficiently transfer a shear load inside the composite material structure 10 or 10A. Rectangular openings 4 are arranged in the Y axial direction in the coupling section 13 in the structure of the FIG. 10A. The base sections 21 and 22 and the column sections 25 and 26 are formed in the coupling section 13 because of the openings 4 of such a shape. The base section 21 is connected to the bonding section 11 and is disposed to extend in the Y axial direction along the bonding section 11. Also, the base section 22 is connected to the bonding section 12 and is disposed to extend in the Y axial direction along the bonding section 12. The column sections 25 and 26 extend perpendicularly to the base sections 21 and 22 to connect the base sections 21 and 22. Here, the column section 25 is connecting to the ends of the base sections 21 and 22 and the column section 26 is connected to the base sections 21 and 22 at a middle position of the base sections 21 and 22.

In the structure of FIG. 10A, because the column sections 25 and 26 are disposed to extend perpendicularly to the base sections 21 and 22 to connect the base sections 21 and 22, the load in the board thickness direction can be efficiently transferred inside the composite material structure 10 or 10A. The structure of such a coupling section 13 is effective to support the load in the board thickness direction which acts on the composite material structure 10 or 10A while reducing the weight of the composite material structure 10 or 10A.

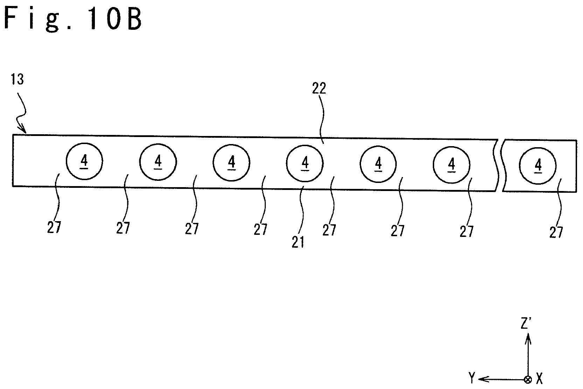

FIG. 10B is a side view showing another example of the structure of the coupling section 13 of the corrugated core 3 to efficiently transfer a shear load inside the composite material structure 10 or 10A. In the structure of FIG. 10B, the circular openings 4 are arranged in the Y axial direction in the coupling section 13. By providing the openings 4 of such a shape, the base sections 21 and 22 and the column sections 27 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12. The column section 27 extends perpendicularly to the base sections 21 and 22 to connect the base sections 21 and 22.

In the structure of FIG. 10B, because the column section 27 extends perpendicularly to the base sections 21 and 22 to connect the base sections 21 and 22, the load in the board thickness direction can be efficiently transferred inside the composite material structure 10 or 10A. The structure of such a coupling section 13 is effective to support the load in the board thickness direction that acts on the composite material structure 10 or 10A while reducing the weight of the composite material structure 10 or 10A. Also, in the structure of FIG. 10B, 4 because the opening 4 is circular, it is difficult for the stress to center in the neighborhood of the opening so that the strength of the composite material structure 10 or 10A can be improved.

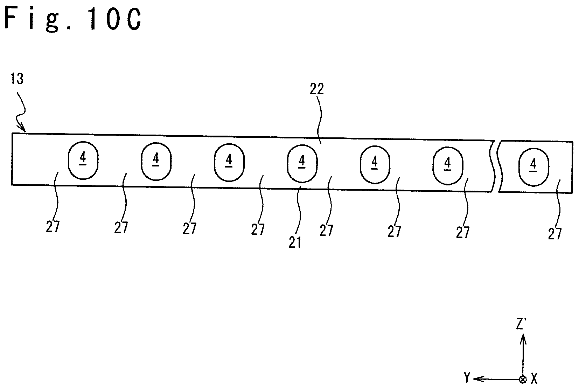

FIG. 10C is a side view showing still another example of the structure of the coupling section 13 of the corrugated core 3 to efficiently transfer a shear load inside the composite material structure 10 or 10A. In the structure of FIG. 10C, the openings 4 having an oval shape long in a direction orthogonal to the Y axial direction are arranged in the Y axial direction of the coupling section 13. The term of "oval" in this Specification is used in the meaning that contains both of an ellipse and a shape in which two semicircles are combined by two parallel lines. By providing the openings 4 of such a shape, the base sections 21 and 22 and column sections 27 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12. The column section 27 extends perpendicular to the base sections 21 and 22 to connect the base sections 21 and 22.

In the structure of FIG. 10C, too, by providing the column section 27 extending perpendicularly to the base sections 21 and 22 to connect the base sections 21 and 22, it is possible to efficiently transfer the load in the board thickness direction inside the composite material structure 10 or 10A. The structure of such a coupling section 13 is effective to support the load in the board thickness direction which acts on the composite material structure 10 or 10A while reducing the weight of the composite material structure 10 or 10A. Also, in the structure of FIG. 10C, it is difficult for the stress to center in the neighborhood of the opening 4 because the opening 4 has an oval shape, and the strength of the composite material structure 10 or 10A can be improved.

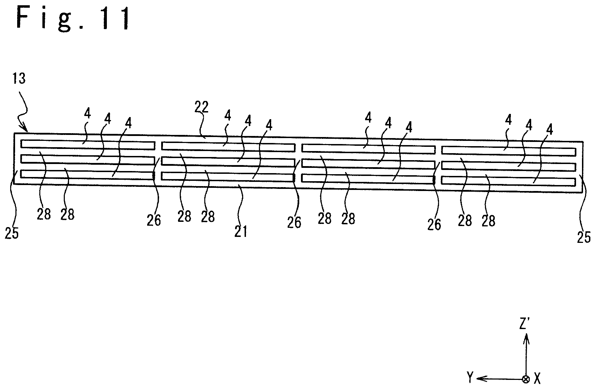

FIG. 11 is a side view showing the structure of the corrugated core 3 suitable for efficiently transferring the load which acts on an axial direction (i.e. the Y axial direction) inside the composite material structure 10 or 10A (that is, a shape of the opening 4 formed in the corrugated core 3). Note that FIG. 11 shows the structure when the coupling section 13 of the corrugated core 3 is viewed in the direction of the arrow A in FIG. 2. In FIG. 11, too, the Z axial direction but the Z' axial direction (a direction perpendicular to the Y axial direction and along the coupling section 13) is shown. Note that the upper and lower direction in FIG. 11 is the Z' axial direction.

In the structure of FIG. 11, substantially rectangular openings 4 are arranged in the coupling section 13 in a matrix manner (i.e., arranged in the Y axial direction and the Z' axial direction). By providing the openings 4 of such a shape, the base sections 21 and 22, the column sections 25 and 26 and beam sections 28 are formed in the coupling section 13. The base section 21 is connected to the bonding section 11 and is disposed to extend in the Y axial direction along the bonding section 11. Also, the base section 22 is connected to the bonding section 12 and is disposed to extend in the Y axial direction along the bonding section 12. The column sections 25 and 26 extend perpendicularly to the base sections 21 and 22 to connect the base sections 21 and 22. Here, the column section 25 is connecting to the ends of the base sections 21 and 22, and the column section 26 is connected to the base sections 21 and 22 in the middle position of the base sections 21 and 22. The beam section 28 extends in the axial direction of the composite material structure 10 or 10A (i.e. in the Y axial direction) to connect the neighbor column sections 25 and 26.

By providing the beam section 28 that extends in the axial direction of the composite material structure 10 or 10A (i.e. in the Y axial direction) to connect the neighbor column sections 25 and 26, the structure of FIG. 11 can efficiently transfer the axial direction load inside the composite material structure 10 or 10A. The structure of such a coupling section 13 is effective to support the axial direction load which acts on the composite material structure 10 or 10A while reducing the weight of the composite material structure 10 or 10A.

Next, a manufacturing method of the composite material structure 10 or 10A according to the present embodiment of the invention and exemplary embodiment will be described. In the above-mentioned various types of the composite material structure 10 or 10A, the face plates 1 and 2 and the corrugated core 3 can be manufactured by various methods. The face plate 1 and the corrugated core 3 may be manufactured as an integrated member. Also, the face plate 1 and the corrugated core 3 are manufactured as separate members, and then they are may be bonded. In the same way, the face plate 2 and the corrugated core 3 may be manufactured as separate members and then they may be bonded. Also, all of the face plates 1 and 2 and the corrugated cores 3 may be manufactured as an integrated member.

In one embodiment, intermediate products, from which the face plates 1 and 2 and the corrugated core 3 are finally formed, are formed a sheet-like or tape-like prepreg, respectively. The intermediate products may be bonded by co-curing, co-bonding or a secondary adhesion.

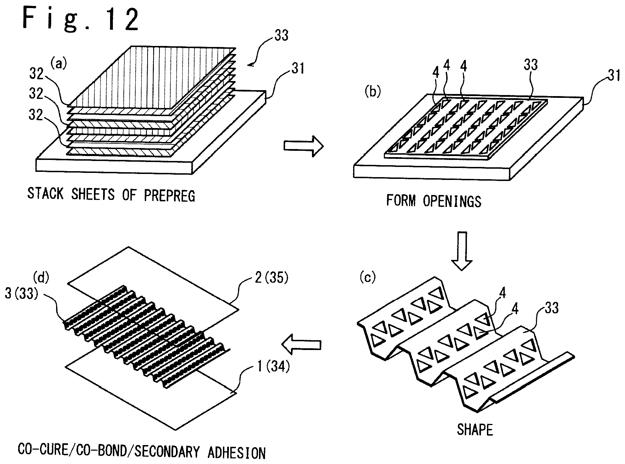

FIG. 12 is a conceptual diagram showing an example of the manufacturing method for manufacturing the composite material structure 10 by using the sheet-like prepreg. The sheet-like prepreg 32 is stacked on a flat mandrel 31 to form a stacked layers structure 33 (FIG. 12(a)). To be mentioned later, the stacked layers structure 33 is the intermediate product from which the corrugated core 3 is formed in the following process. The number of sheets of the prepreg 32 to be stacked and the direction of fiber in each sheet of the prepreg 32 are determined such that the corrugated core 3 to be formed finally, has appropriate strength and stiffness.

Next, the openings 4 are formed in the stacked layer structure 33 by punching or cutting (FIG. 12(b)).

Next, the stacked layer structure 33 is shaped to have the shape of the corrugated core 3 to be formed finally, by pressing or draping (FIG. 12(c)). At this time, the stacked layer structure 33 is in the un-cured condition.

Next, the face plates 1 and 2 and the corrugated core 3, which are shaped as separate members, are bonded to each other and then the manufacture of the composite material structure 10 completes (FIG. 12(d)). The bonding of the face plates 1 and 2 and the corrugated core 3 can be carried out by various techniques.

The face plates 1 and 2 and the corrugated core 3 may be bonded by co-curing. In this case, un-cured members 34 and 35, from which the face plates 1 and 2 can be formed finally, are formed by stacking the sheets of prepreg. The members 34 and 35 in addition to the stacked layer structure 33 are cured so that the composite material structure 10 is completed in which the face plates 1 and 2 and the corrugated core 3 are bonded to each other.

Also, the face plates 1 and 2 and the corrugated core 3 may be bonded by co-bonding. In this case, the stacked layer structure 33 is cured to form the corrugated core 3, whereas the un-cured members 34 and 35, from which the face plates 1 and 2 are formed finally, are formed by stacking the sheets of prepreg. The curing is carried out in the state that the un-cured members 34 and 35 are brought into contact with the corrugated core 3 through the adhesive materials. Thus, the composite material structure 10 is completed in which the face plates 1 and 2 and the corrugated core 3 are bonded to each other.

Also, the face plates 1 and 2 and the corrugated core 3 may be bonded through a secondary adhesion. In this case, a stacked layer structure 33 is cured to form the corrugated core 3, whereas the face plates 1 and 2 after the curing are formed. The cured corrugated core 3 is brought into contact with the cured face plates 1 and 2 and the adhesive material is cured in such a condition. Thus, the composite material structure 10 in which the face plates 1 and 2 and the corrugated core 3 are bonded is completed.

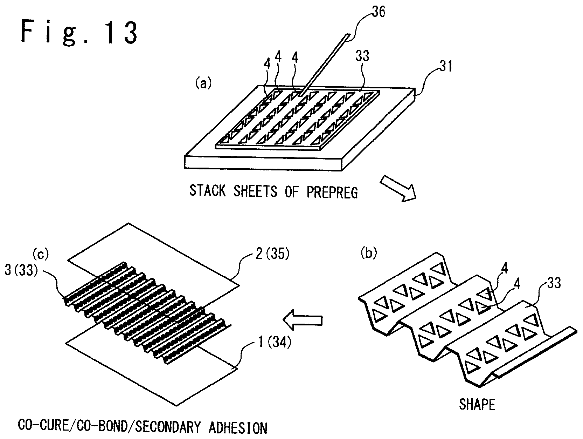

FIG. 13 is a conceptual diagram showing an example of the manufacturing method which manufactures the composite material structure 10 by using a tape-like prepreg (a prepreg tape). The prepreg tape 36 is stacked on a flat mandrel 31 and the stacked layer structure 33 is formed in which the openings 4 have been formed (FIG. 13(a)). The prepreg tape 36 may be stacked by using an AFP (automated fiber placement) technique. In this case, in the manufacturing method of FIG. 13, the stacked layer structure 33 of a desired shape can be formed by using the prepreg tape. Therefore, note that it is not necessary to form the openings 4 by a punching technique and a cutting technique.

Next, the stacked layer structure 33 is shaped to have the final shape of the corrugated core 3, by a pressing technique and a draping technique, like the manufacturing method of FIG. 12 (FIG. 13(b)). Moreover, a process which bonds the face plates 1 and 2 and the corrugated core 3 is carried out (FIG. 13(c)). Like the manufacturing method of FIG. 12, either of co-curing, co-bond, and the second adhesive material may be used in the process which bonds the face plates 1 and 2 and the corrugated core 3. Through the above process, the composite material structure 10 is completed.

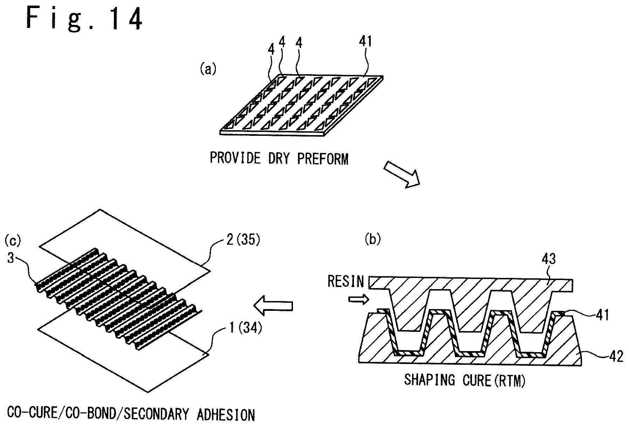

On the other hand, FIG. 14 is a conceptual diagram showing a manufacturing method which manufactures the composite material structure 10 by using an RTM (resin transfer molding) technique to impregnate a resin into a dry preform.

First, the dry preform 41 which has openings 4 is prepared (FIG. 14(a)). The dry preform 41 having the opening 4 may be shaped to form the opening 4 by carrying out the punching technique and the cutting technique of a flat-plate-like dry preform.

Next, the resin is impregnated into the dry preform 41 by the RTM, to form the corrugated core 3 (FIG. 14(b)). In detail, the resin is impregnated in the condition that the dry preform 41 is put between the mandrels 42 and 43, and moreover, the resin is cured at the desired temperature. Thus, the cured corrugated core 3 is completed.

Next, a process of bonding the face plates 1 and 2 and the corrugated core 3, which are formed as separate members, is carried out and the manufacture of the composite material structure 10 completes (FIG. 14(c)). The bonding of the face plates 1 and 2 and the corrugated core 3 can be carried out by various techniques.

The face plates 1 and 2 and the corrugated core 3 may be bonded by co-bonding. In this case, the un-cured members 34 and 35, from which the face plates 1 and 2 are formed finally, are formed by stacking the sheets of prepreg. Moreover, the curing is carried out in the state that the cured corrugated core 3 is made contact the un-cured members 34 and 35 through the adhesive materials. Thus, the composite material structure 10 completes in which the face plates 1 and 2 and the corrugated core 3 are bonded to each other.

Also, the face plates 1 and 2 and the corrugated core 3 may be bonded by the secondary adhesion. In this case, the cured face plates 1 and 2 are prepared, and then the curing is carried out in the state that the cured corrugated core 3 is made contact the cured face plates 1 and 2 through the adhesive materials. Thus, the composite material structure 10 completes in which the face plates 1 and 2 and the corrugated core 3 are bonded to each other.

Note that it could be easily understood to a person skilled in the art that the manufacture of the composite material structure 10A that does not have the face plate 2 can be realized by not bonding the face plate 2 to the corrugated core 3, in the above-mentioned manufacturing method.

In the above, various embodiments of the present invention have been specifically described, but the present invention is not limited to the above-mentioned embodiments. It is apparent to the skilled person in the art that the present invention can be implemented with various modifications.

### [Explanation of the code]

- 1, 2:: face plate
- 1 a, 2a:: inner surface
- 1 b, 2b:: outer surface
- 3:: corrugated core
- 4, 4a to 4d:: opening
- 10 or 10A:: composite material structure
- 11, 12:: bonding section
- 13:: coupling section
- 14, 15:: space
- 17, 18:: side
- 21 and 22:: base section
- 23 and 24:: diagonal column section
- 25, 26, 27:: column section
- 28:: beam section
- 31:: mandrel
- 32:: prepreg
- 33:: stacked layer structure
- 34, 35:: member
- 36:: prepreg tape
- 41:: dry preform
- 42, 43:: mandrel

## Claims

1. A composite material structure (10) comprising:
a first face plate (1) formed of a composite material;
a second face plate (2) formed of a composite material and disposed to be opposite to the first face plate (1); and
a corrugated core (3) formed of a composite material and bonded to the first face plate (1) and to the second face plate (2),
wherein the corrugated core (3) has at least one opening (4) and comprises:
a first bonding section (11) bonded to the first face plate (1) and configured to extend in a first direction along the first face plate (1);
a second bonding section (12) bonded to the second face plate (2) and configured to extend in the first direction; and
a coupling section (13) connected between the first bonding section (11) and the second bonding section (12) and configured to extend in the first direction,
wherein the corrugated core (3) is configured such that a first space (14) surrounded by the second bonding section (12), the coupling section (13) and the first face plate (1) extends in the first direction and a second space (15) surrounded by the first bonding section (11), the coupling section (13) and the second face plate (2) extends in the first direction,
wherein the first space (14) and the second space (15) are alternately arranged in a second direction along the first face plate (1) which is different from the first direction, and
wherein the at least one opening (4) is disposed in the coupling section (13).

2. The composite material structure (10) according to claim 1, wherein the corrugated core (3) includes a plurality of openings (4),
wherein the plurality of openings (4) are formed in the corrugated core (3) such that a truss structure is realized in the corrugated core (3).

3. The composite material structure (10) according to claim 1, wherein the corrugated core (3) comprises a plurality of the openings (4) arranged in the second direction,
wherein the corrugated core (3) comprises:
a first base section (21) bonded to the first bonding section (11) and configured to extend in the first direction;
a second base section (22) bonded to the second bonding section (12) and configured to extend in the first direction;
a first diagonal column section (23) configured to extend diagonally to the first direction to connect the first base section (21) and the second base section (22); and
a second diagonal column section (24) configured to extend diagonally to the first direction to connect the first base section (21) and the second base section (22),
wherein a position where the first diagonal column section (23) is connected to the second base section (22) is shifted in the first direction from a position where the first diagonal column section (23) is connected to the first base section (21), and
wherein a position where the second diagonal column section (24) is connected to the first base section (21) is shifted in the first direction from a position where the second diagonal column section (24) is connected to the second base section (22).

4. The composite material structure (10) according to claim 1 or 2, wherein the at least one opening (4) has a circular shape.

5. The composite material structure (10) according to claim 1 or 2, wherein the at least one opening (4) has an oval shape.

6. A liquid tank comprising the composite material structure (10) according to any one of claims 1 to 5 arranged such that a liquid can be stored between the first face plate (1) and the second face plate (2).

## Patentansprüche

1. Eine Verbundmaterialstruktur (10) mit:
einer ersten Frontplatte (1), die aus einem Verbundmaterial gebildet ist,
einer zweiten Frontplatte (2), die aus einem Verbundmaterial gebildet ist und gegenüber der ersten Frontplatte (1) angeordnet ist, und
einem gerippten Kern (3), der aus einem Verbundmaterial gebildet ist und mit der ersten Frontplatte (1) und der zweiten Frontplatte (2) verbunden ist,
wobei der gerippte Kern (3) zumindest eine Öffnung (4) besitzt und aufweist:
einen ersten Verbindungsabschnitt (11), der mit der ersten Frontplatte (1) verbunden ist und konfiguriert ist, um sich in einer ersten Richtung entlang der ersten Frontplatte (1) zu erstrecken,
einen zweiten Verbindungsabschnitt (12), der mit der zweiten Frontplatte (2) verbunden ist und konfiguriert ist, um sich in der ersten Richtung zu erstrecken, und
einen Kopplungsabschnitt (13), der zwischen dem ersten Verbindungsabschnitt (11) und dem zweiten Verbindungsabschnitt (12) verbunden ist und konfiguriert ist, um sich in der ersten Richtung zu erstrecken,
wobei der gerippte Kern (3) so konfiguriert ist, dass ein erster Raum (14), der von dem zweiten Verbindungabschnitt (12), dem Kopplungsabschnitt (13) und der ersten Frontplatte (1) umgeben ist, sich in der ersten Richtung erstreckt, und ein zweiter Raum (15), der von dem ersten Verbindungsabschnitt (11), dem Kopplungsabschnitt (13) und der zweiten Frontplatte (2) umgeben ist, sich in der ersten Richtung erstreckt,
wobei der erste Raum (14) und der zweite Raum (15) abwechselnd in einer zweiten Richtung entlang der ersten Frontplatte (1), die von der ersten Richtung unterschiedlich ist, angeordnet sind, und
wobei die zumindest eine Öffnung (4) in dem Kopplungsabschnitt (13) angeordnet ist.

2. Die Verbundmaterialstruktur (10) gemäß Anspruch 1, wobei der gerippte Kern (3) eine Vielzahl von Öffnungen (4) aufweist,
wobei die Vielzahl von Öffnungen (4) in dem gerippten Kern (3) so ausgebildet sind, dass eine Fachwerkstruktur in dem gerippten Kern (3) verwirklicht ist.

3. Die Verbundmaterialstruktur (10) gemäß Anspruch 1, wobei der gerippte Kern (3) eine Vielzahl von den Öffnungen (4), die in der zweiten Richtung angeordnet sind, aufweist,
wobei der gerippte Kern (3) aufweist:
einen ersten Basisabschnitt (21), der mit dem ersten Verbindungsabschnitt (11) verbunden ist und konfiguriert ist, um sich in der ersten Richtung zu erstrecken,
einen zweiten Basisabschnitt (22), der mit dem zweiten Verbindungsabschnitt (12) verbunden ist und konfiguriert ist, um sich in der ersten Richtung zu erstrecken,
einen ersten diagonalen Säulenabschnitt (23), der konfiguriert ist, um sich diagonal zu der ersten Richtung zu erstrecken, um den ersten Basisabschnitt (21) und den zweiten Basisabschnitt (22) zu verbinden, und
einen zweiten diagonalen Säulenabschnitt (24), der konfiguriert ist, um sich diagonal zu der ersten Richtung zu erstrecken, um den ersten Basisabschnitt (21) und den zweiten Basisabschnitt (22) zu verbinden,
wobei eine Position, wo der erste diagonale Säulenabschnitt (23) mit dem zweiten Basisabschnitt (22) verbunden ist, in der ersten Richtung von einer Position versetzt ist, wo der erste diagonale Säulenabschnitt (23) mit dem ersten Basisabschnitt (21) verbunden ist, und
wobei eine Position, wo der zweite diagonale Säulenabschnitt (24) mit dem ersten Basisabschnitt (21) verbunden ist, in der ersten Richtung von einer Position versetzt ist, wo der zweite diagonale Säulenabschnitt (24) mit dem zweiten Basisabschnitt (22) verbunden ist.

4. Die Verbundmaterialstruktur (10) gemäß Anspruch 1 oder 2, wobei die zumindest eine Öffnung (4) eine Kreisform besitzt.

5. Die Verbundmaterialstruktur (10) gemäß Anspruch 1 oder 2, wobei die zumindest eine Öffnung (4) eine ovale Form besitzt.

6. Ein Flüssigkeitstank mit der Verbundmaterialstruktur (10) gemäß einem der Ansprüche 1 bis 5, die so angeordnet ist, dass eine Flüssigkeit zwischen der ersten Frontplatte (1) und der zweiten Frontplatte (2) gespeichert werden kann.

## Revendications

1. Structure (10) en matériau composite, comprenant :
une première plaque (1) de face en un matériau composite ;
une deuxième plaque (2) de face en un matériau composite, disposée à l'opposé de la première plaque (1) de face et
une âme (3) ondulée en un matériau composite liée à la première plaque (1) de face et à la deuxième plaque (2) de face,
dans laquelle l'âme (3) ondulée a au moins une ouverture (4) et comprend :
une première partie (11) de liaison liée à la première plaque (1) de face et configurée pour s'étendre dans une première direction le long de la première plaque (1) de face ;
une deuxième partie (12) de liaison liée à la deuxième plaque (2) de face et configurée pour s'étendre dans la première direction et
une partie (13) de jonction jointe entre la première partie (11) de liaison et la deuxième partie (12) de liaison et configurée pour s'étendre dans la première direction,
dans laquelle l'âme (3) ondulée est configurée de manière à ce qu'un premier espace (14), entouré par la deuxième partie (12) de liaison, la partie (13) de jonction et la première plaque (1) de face, s'étende dans la première direction et de manière à ce qu'un deuxième espace (15), entouré par la première partie (11) de liaison, la partie (13) de jonction et la deuxième plaque (2) de face, s'étende dans la première direction,
dans laquelle le premier espace (14) et le deuxième espace (15) sont disposés en alternance dans une deuxième direction le long de la première plaque (1) de face, qui est différente de la première direction et
dans laquelle la au moins une ouverture (4) se trouve dans la partie (13) de jonction.

2. Structure (10) en matériau composite suivant la revendication 1, dans laquelle l'âme (13) ondulée comprend une pluralité d'ouvertures (4),
dans laquelle la pluralité d'ouvertures (4) est formée dans l'âme (3) ondulée, de manière à réaliser une structure en treillis dans l'âme (3) ondulée.

3. Structure (10) en matériau composite suivant la revendication 1, dans laquelle l'âme (3) ondulée comprend une pluralité d'ouvertures (4) disposées dans la deuxième direction,
dans laquelle l'âme (3) ondulée comprend :
une première partie (21) de base, liée à la première partie (11) de liaison et configurée pour s'étendre dans la première direction ;
une deuxième partie (22) de base, liée à la deuxième partie (12) de liaison et configurée pour s'étendre dans la première direction ;
une première partie (23) de colonne en diagonale, configurée pour s'étendre en diagonale à la première direction, pour joindre la première partie (21) de base et la deuxième partie (22) de base et
une deuxième partie (24) de colonne en diagonale, configurée pour s'étendre en diagonale à la première direction pour joindre la première partie (21) de base et la deuxième partie (22) de base,
dans laquelle une position où la première partie (23) de colonne en diagonale est jointe à la deuxième partie (22) de base est décalée dans la première direction à partir d'une position où la première partie (23) de colonne en diagonale est jointe à la première partie (21) de base et
dans laquelle une position où la deuxième partie (24) de colonne en diagonale est jointe à la première partie (21) de base est décalée dans la première direction à partir d'une position où la deuxième partie (24) de colonne en diagonale est jointe à la deuxième partie (22) de base.

4. Structure (10) en matériau composite suivant la revendication 1 ou 2, dans laquelle la au moins une ouverture (4) a une forme circulaire.

5. Structure (10) en matériau composite suivant la revendication 1 ou 2, dans laquelle la au moins une ouverture (4) a une forme ovale.

6. Réservoir à liquide, comprenant la structure (10) en matière composite suivant l'une quelconque des revendications 1 à 5, disposée de manière à ce qu'un liquide puisse être stocké entre la première plaque (1) de face et la deuxième plaque (2) de face.
